# FASCICULE DE BREVET EUROPEEN

(11) **EP 2 484 650 B1**
(45) Date de publication et mention de la délivrance du brevet: **23.11.2016**
(21) Numéro de dépôt: 12154119.7
(22) Date de dépôt: 06.02.2012
(51) Int. Cl.: A01K 61/00, E02B 3/04, C04B 14/28, C04B 28/02, C04B 111/74

(54) **OUVRAGE COMPRENANT PLUSIEURS BLOCS DE BÉTON NON-ARMÉ COQUILLIER FIBRÉ ET PROCÉDÉ DE FABRICATION D'UN TEL OUVRAGE**
BAUWERK, DAS MEHRERE NICHT ARMIERTE MUSCHELNENTHALTENDE FASERBETONBLÖCKE UMFASST, UND HERSTELLUNGSVERFAHREN EINES SOLCHEN BAUWERKS
STRUCTURE INCLUDING A PLURALITY OF BLOCKS OF NON-REINFORCED FIBROUS, SHELL-CONTAINING CONCRETE AND METHOD FOR MANUFACTURING SUCH A STRUCTURE

(30) Priorité: 04.02.2011 FR 1150940
(43) Date de publication de la demande: 08.08.2012
(73) Titulaire: Egis Eau, 34000 Montpellier (FR)
(72) Inventeur: Pioch, Sylvain, 34430 Saint Jean de Vedas (FR); Monier, Thierry, 34110 Vic La Gardiole (FR); Albrecht, Jean-Paul, 34000 Montpellier (FR); Martareche, Frédéric, 34830 Jacou (FR)
(74) Mandataire: Derambure, Christian

(56) Documents cités:
- EP-A1- 1 875 801
- EP-A1- 2 302 135
- FR-A1- 2 944 788
- JP-A- 2001 253 747
- US-A- 5 071 285
- US-A- 5 836 265
- US-B1- 7 144 196
- Anonymous: "Schöck ComBAR, Technical Information", , 1 juin 2010 (2010-06-01), pages 1-32, XP55026091, Germany Extrait de l'Internet: URL:http://www.schoeck.co.uk/upload/files/ download/100037_TI_ComBAR_INT_rz_web_locke d_3075_[2907].pdf [extrait le 2012-05-03]

## Description

L'invention concerne, de façon générale, un ouvrage destiné à une utilisation en milieu subaquatique comportant plusieurs blocs de construction formés à partir d'un béton non armé.

L'invention concerne également un procédé de fabrication d'un tel ouvrage.

Il est généralement connu, dans le domaine de la construction en milieu marin et/ou aquatique, autrement dit subaquatique, d'utiliser du béton armé pour la fabrication d'ouvrages. Toutefois, cette utilisation se heurte à la problématique de la corrosion des armatures d'acier enrobées à l'intérieur du béton armé qui provoque la destruction prématurée de l'ouvrage.

Une solution utilisée pour écarter au moins partiellement cette problématique consiste à employer un enrobage de béton présentant une épaisseur suffisante pour protéger les armatures en acier vis-à-vis du milieu aquatique. Toutefois, cette protection implique d'utiliser des épaisseurs d'enrobage importantes, imposant par là même une épaisseur minimale de l'ouvrage, ce qui augmente les coûts de fabrication sans assurer une protection totalement adéquate. En outre, en cas de casse accidentelle de l'ouvrage en plusieurs morceaux, les armatures d'acier dans les plans de coupe ne sont plus protégées contre la corrosion ce qui conduit inévitablement à une destruction prématurée de chacun des morceaux.

Il est, par ailleurs, connu du document FR-A-2 944 788 un béton non armé fabriqué à partir d'un sable coquillier aggloméré par un liant. Une telle réalisation permet de répondre au problème technique de la corrosion des armatures d'acier puisque ces dernières disparaissent, tout en favorisant le développement de la biodiversité marine, en améliorant la fixation de la faune et la flore sur ledit béton. Cette réalisation présente cependant l'inconvénient de ne pas fournir un béton dont les propriétés mécaniques assurent une solidité suffisante pour certains ouvrages soumis à d'importantes contraintes mécaniques.

Le document US-A-5 071 285 décrit un ouvrage, notamment un récif artificiel, comportant une pluralité des blocs de construction en béton armé, empilés par des moyens d'association formant entretoise entre les blocs.

Dans un domaine technique tout à fait différent, il est connu des documents JP2004/154100, JP2002/335805, JP2002/335807, GB-A-745 912, JP-A-2006110727 et KR-A-2003/9097568 des blocs de béton formés notamment à partir de coquilles de déchets conchylicoles et destinés à être installés dans un environnement aquatique afin de favoriser le développement de la faune et la flore. Ces réalisations présentent cependant l'inconvénient d'être réalisées à partir d'un béton comprenant des coquilles mélangées avec des éléments métalliques. Ainsi, ces blocs de béton - qui ne sont pas destinées à la réalisation d'ouvrages - se heurtent également à la problématique de la corrosion des éléments métalliques et présentent donc des propriétés mécaniques amoindries, incompatibles avec le domaine de la construction. Par ailleurs, les procédés de fabrication utilisés pour éliminer les chlorures contenus dans les coquilles concassées sont, d'une part, couteux et, d'autre part, nocifs pour l'environnement du fait de l'utilisation de produits chimiques nuisibles.

Il est, en outre, connu des documents FR-A-2 930 906, KR-B-759 391, WO-A-1999/036640, GB-A-2 459 833, et JP-A-2001/253747 des bétons contenant des fibres de renfort. Toutefois, les bétons décrits dans ces documents sont réalisés à partir de granulats ordinaires, ce qui ne favorise pas leur intégration dans le milieu aquatique.

Le document n° GB-A-2 451 440 décrit un matériau de revêtement destiné à recouvrir les surfaces extérieures de bâtiments terrestres. Ce document n'appartient pas au domaine de l'invention car, d'une part, il n'est pas destiné à une utilisation subaquatique et, d'autre part et surtout, il ne se rapporte pas un à béton mais à un mortier ou un crépi simplement destiné à recouvrir les murs d'un bâtiment. Outre que ce document n° GB-A-2 451 440 décrive lui-même le matériau de parement comme un crépi, il est intéressant de signaler que ce dernier se distingue d'un béton principalement en ce qu'il ne comprend pas de graviers. Dès lors, les propriétés mécaniques du matériau de parement sont celles d'un crépi, suffisamment léger pour être appliqué sur une face verticale sans tomber, mais certainement pas d'un béton capable de constituer un corps plein destiné à être utilisé dans la construction d'un ouvrage.

Le document n° KR-A-2005/0128533 décrit également un mortier réalisé à partir de coquilles d'huitres broyées et de fibres de renfort. Plus particulièrement, grâce à l'utilisation des coquilles d'huitres, ce mortier est auto-plaçant, ce qui faciliterait son utilisation. Toutefois, de la même façon que précédemment, il ne s'agit là que d'un mortier et non d'un béton.

Dans le domaine de la construction en milieu subaquatique, il est connu d'associer plusieurs blocs de béton pour former un ouvrage destiné à être disposé en milieu subaquatique. Il convient alors d'assurer le levage de cet ouvrage, c'est-à-dire l'opération qui consiste à manipuler les plusieurs blocs de béton formant l'ouvrage pour les placer en position dans le milieu aquatique.

Une solution traditionnelle pour réaliser cette opération de levage consiste à former des évidements coaxiaux au travers de chacun des blocs de béton, puis à disposer des tiges métalliques au travers de ces évidements. L'extrémité supérieure de la tige métallique peut coopérer avec des moyens de levage tandis que son extrémité inférieure présente un filetage auquel est associé un boulon dès que la tige métallique est en position dans les évidements des blocs de béton, Ainsi, lorsque l'extrémité supérieure de la tige métallique est levée pour la mise à l'eau de l'ouvrage, le boulon fixé à son extrémité inférieure empêche l'ensemble des blocs de béton de chuter. Cette solution technique présente des inconvénients puisque, comme précédemment, elle implique l'utilisation d'une tige métallique susceptible de se corroder au contact de l'eau. En outre, compte-tenu de l'assemblage qui est fait des blocs de béton, il pèse - lors du levage - sur le bloc de béton inférieur qui est en contact avec le boulon une charge correspondant à la somme des poids des autres blocs de béton. Dès lors, l'opération de levage peut entraîner une rupture du dernier bloc de béton lorsque les propriétés mécaniques de ce dernier sont insuffisantes.

D'autres réalisations d'ouvrages formés de plusieurs blocs de béton associés les uns aux autres sont connus de l'état de la technique. Notamment, les documents n°US-A-4 914 876 et CA-A1-2 213 443 décrivent deux modes de réalisation de murs formés à partir de plusieurs blocs de béton reliés les uns aux autres par l'intermédiaire de moyens d'association réciproques présentant un élément mâle et un élément femelle. Plus particulièrement, selon le document n° US-A-4 914 876 l'élément mâle serait formé par un pion susceptible d'être retenu dans un évidement ajusté formant l'élément femelle. Et d'après le document n° CA-A1-2,213,443, cet élément mâle serait formé par une tige d'assemblage susceptible d'être réalisée en béton de haute résistance, en matériaux synthétiques ou en plastique de récupération. Toutefois, aucun de ces documents ne concerne l'utilisation de blocs de béton non armé en milieu subaquatique. En outre, aucune des solutions décrites dans ces documents ne permet de répondre aux problématiques de résistance à la rupture que soulève l'opération de levage d'un ouvrage destiné à une utilisation subaquatique.

Dans ce contexte, la présente invention a pour but de proposer un ouvrage destiné à une utilisation en milieu subaquatique et comportant au moins deux blocs de construction formés à partir d'un béton non armé qui soit exempt de l'une au moins des limitations précédemment évoquées.

Plus précisément, l'invention vise à réaliser un ouvrage réalisé à partir de blocs de construction formés par un béton non armé qui soit donc dépourvu d'armature métallique, qui permettent d'assurer le développement de la faune et la flore en milieu subaquatique et qui présente des propriétés mécaniques suffisante pour résister aux contraintes d'une opération de levage en vue de la mise en place de l'ouvrage dans le milieu subaquatique.

À cette fin, l'invention se rapporte à un ouvrage spécialement destiné à une utilisation en milieu subaquatique comportant au moins deux blocs de construction formés à partir d'un béton non armé comprenant un liant et un éco-granulat aggloméré par le liant, dans lequel l'éco-granulat, qui est dépourvu d'élément métallique, comprend des graviers, des fibres de renfort et du sable coquillier composé d'agrégats formés à partir de coquilles de déchets conchylicoles et présentant des dimensions allant de 160 micromètres à 4 millimètres Selon l'invention les deux blocs de construction comprennent des moyens d'association rigide réciproques présentant un organe femelle et un organe mâle aptes à coopérer pour assurer l'association structurelle des blocs de construction l'un avec l'autre, l'organe mâle étant formé par une tige en fibre de verre partiellement scellée dans le béton non armé, la tige en fibre de verre comprenant une portion extrême supérieure s'épanouissant en dehors des réservations, ce qui permet d'y fixer des moyens de levage.

Grâce à cette réalisation, le béton non armé - qualifié de béton coquillier du fait de l'utilisation de sables coquillier - favorise le développement de la faune et la flore en milieu subaquatique sans nécessiter l'utilisation d'éléments métalliques vulnérables à la corrosion et susceptibles d'accélérer l'endommagement de l'ouvrage. Par ailleurs, l'utilisation de fibres de renfort permet de garantir des propriétés mécaniques de résistance et de durabilité plus élevées que les solutions de l'art antérieur tout en restant proactif vis-à-vis de la biodiversité en milieu marin et/ou aquatique. Le béton non armé est donc à la fois résistant, inerte et permet de réaliser des formes complexes sur des épaisseurs réduites. En outre, l'utilisation d'une tige en fibre de verre pour assurer l'assemblage de plusieurs blocs de construction les uns avec les autres est avantageux car cette dernière présente des propriétés mécaniques intéressantes et qu'elle ne risque pas de s'endommager par corrosion. Par ailleurs, le fait de sceller la tige en fibre de verre dans le béton non armé permet de la relier mécaniquement, par adhérence, à chacun des blocs de construction. De ce fait, lors de l'opération de levage chaque bloc de construction supporte son propre poids et ne pèse donc plus sur le bloc de construction inférieur. Il est à noter qu'après immersion dans le milieu subaquatique, les éléments constitutifs de l'ouvrage subissant la poussée d'Archimède présentent un poids dit « déjaugé », correspondant à leur densité initiale minorée de la densité de l'eau. Le bloc de construction inférieur est donc *in fine* soumis à une charge moins importante que dans les réalisations antérieures. En conséquence, les risques de rupture sont mieux maitrisés.

Selon une réalisation, la tige en fibre de verre est au moins partiellement logée dans les deux blocs de construction de sorte à assurer une liaison mécanique desdits blocs de construction avec ladite tige en fibre de verre, par adhérence de cette dernière avec le béton non armé et/ou avec un produit de scellement. De même que précédemment, cette réalisation assure une liaison mécanique de chacun des blocs de construction sur la tige en fibre de verre et, donc, permet de limiter les charges reposant sur le bloc de construction inférieur lors de l'opération de levage.

Selon une réalisation, l'organe femelle des moyens d'association rigide réciproques comporte une réservation formée dans l'un des blocs de construction et à l'intérieure de laquelle sont agencés la tige en fibre de verre et le produit de scellement. Dans ce cas, la tige en fibre de verre est, selon une réalisation, noyée dans le béton non armé formant l'autre des blocs de construction. Une telle réalisation permet de moduler la fabrication des blocs de construction et/ou l'assemblage de ces derniers en assurant, dès la réalisation de l'un des blocs de construction, le maintien de la tige en fibre de verre noyée dans le béton non armé.

Selon une réalisation alternative, l'organe femelle des moyens d'association rigide réciproques comporte des réservations coaxiales formées dans chacun des blocs de construction et à l'intérieure desquelles sont agencés la tige en fibre de verre et le produit de scellement. Une telle réalisation permet, au contraire, de réaliser les blocs de constructions indépendamment les uns des autres et indépendamment de la tige en fibre de verre et d'attendre l'assemblage finale des différents blocs de construction les uns avec les autres pour assurer, en une étape de fabrication seulement, la fixation de la tige en fibre de verre dans l'ensemble des réservations correspondantes.

Selon une réalisation, l'ouvrage comprend des moyens formant entretoise aptes à maintenir un écartement prédéterminé entre les deux blocs de construction. Cette réalisation permet d'assurer précisément l'écartement des différents blocs de construction les uns par rapport aux autres, en fonction des besoins spécifiques du cas d'espèce.

Dans ce cas, selon une réalisation, la tige en fibre de verre est partiellement logée dans les moyens formant entretoise de sorte à assurer une liaison mécanique dudit moyen formant entretoise avec ladite tige en fibre de verre, par adhérence de cette dernière avec le béton non armé et/ou avec un produit de scellement. De cette manière, la surface de la tige en fibre de verre en contact avec le béton non armé ou avec le produit de scellement est augmentée, ce qui permet d'améliorer l'adhérence et, donc, la liaison mécanique de l'ouvrage vis-à-vis de la fibre de renfort.

Plus particulièrement, selon une réalisation, la tige en fibre de verre est noyée dans les moyens formant entretoise. Ainsi, la tige en fibre de verre est non seulement reliée aux blocs de construction mais également aux moyens formant entretoise. L'assemblage mécanique de la tige en fibre de verre dans l'ouvrage et, plus particulièrement, dans le béton non armé constituant les moyens formant entretoise, s'en trouve également renforcé.

Par ailleurs, selon une autre réalisation, les moyens formant entretoise présentent une réservation coaxiale à celle(s) du (ou des) bloc(s) de construction, la tige en fibre de verre étant logée dans cette réservation et scellée par le produit de scellement de sorte à assurer une liaison mécanique desdits moyens formant entretoise avec ladite tige en fibre de verre, par adhérence de cette dernière avec le produit de scellement. Comme précédemment, cette réalisation permet également d'améliorer l'assemblage mécanique de l'ouvrage, par adhérence de la tige en fibre de verre avec le produit de scellement contenu dans la réservation du (ou des) bloc(s) de construction.

Selon une première réalisation, les moyens formant entretoise sont formés à partir du béton non armé et constituent une ou plusieurs extension(s) de l'un des blocs de construction. L'assemblage des blocs de construction pour réaliser l'assemblage est alors simplifié.

Selon une deuxième réalisation, les moyens formant entretoise sont structurellement distincts des blocs de construction et formés à partir d'un matériau différent du béton non armé. La fabrication des blocs de construction peut ainsi être plus homogène - les blocs de construction présentant une forme identique - et les moyens formant entretoise peuvent alors présenter des propriétés mécaniques ou des dimensions différentes selon les besoins recherchés.

Selon une réalisation, l'éco-granulat comprend également du ou des sable(s) secondaire(s) différent(s) du sable coquillier, le sable coquillier représentant de 15% à 50% du poids total des sables coquillier et secondaire(s). Une telle proportion permet, d'une part, d'assurer un développement effectif de la faune et la flore dans le milieu aquatique et, d'autre part, de ne pas limiter la durée de vie du béton du fait de l'utilisation en quantité d'un sable coquillier calcaire.

Selon une réalisation, l'éco-granulat comporte également des granulats complémentaires formés à partir de coquilles de déchets conchylicoles entières et/ou en morceaux et présentant des dimensions supérieures à 4 mm.

Selon une réalisation, les fibres de renfort sont des fibres naturelles et/ou des fibres en polypropylène.

Selon une réalisation, les fibres de renfort présentent une longueur allant de 1 centimètre à 10 centimètres.

Selon une réalisation les fibres de renfort représentent moins de 5 % du poids total de l'éco-granulat, plus particulièrement de 0,2% à 1% du poids total de l'éco-granulat.

Selon une réalisation, l'un et/ou l'autre des au moins deux blocs de construction présente(nt) un corps plein recouvert par un revêtement de surface formé à partir du béton non armé.

Selon une autre réalisation, l'un et/ou l'autre des au moins deux blocs de construction présente(nt) un corps plein formé à partir du béton non armé.

L'invention concerne selon un deuxième aspect, un procédé de fabrication d'un ouvrage destiné à une utilisation dans un milieu subaquatique selon le premier aspect de l'invention, comprenant une pluralité d'étape consistant à : broyer des produits conchylicoles jusqu'à obtenir un sable coquillier comprenant des agrégats présentant des dimensions allant de 160 micromètres à 4 millimètres, associer le sable coquillier, des graviers et des fibres de renfort de manière à former un éco-granulat et agglomérer l'éco-granulat par l'intermédiaire d'un liant de manière à constituer un béton non armé ; réaliser, à partir du béton non armé, un premier bloc de construction comprenant des moyens d'association rigide réciproques formés par une tige en fibre de verre, la tige en fibre de verre comprenant une portion extrême supérieure s'épanouissant en dehors des réservations, ce qui permet d'y fixer des moyens de levage; réaliser, à partir dudit béton
armé, un deuxième bloc de construction comprenant des moyens d'association rigide réciproques formés par une réservation agencée dans le deuxième bloc de construction et à l'intérieur de laquelle peut au moins partiellement être logée la tige en fibre de verre ; assembler les premier et deuxième blocs de construction par scellement de la tige en vibre de verre des moyens d'association rigide réciproques du premier bloc de construction dans la réservation des moyens d'association rigide réciproques du deuxième bloc de construction de sorte à assurer l'association structurelle desdits premier et deuxième blocs de construction.

Outre les bénéfices qui résultent de l'utilisation d'un tel béton non armé pour le développement de la faune et la flore en milieu subaquatique et la durée de vie de l'ouvrage en milieu subaquatique, ce procédé de fabrication permet de réduire les risques de rupture de l'ouvrage en assurant une bonne adhérence des blocs de construction avec la tige en fibre de verre, notamment lors de l'opération de levage qui vise à le placer en milieu subaquatique.

Selon une réalisation, la formation du premier bloc de construction comprend plusieurs étapes consistant, en premier lieu, à couler le béton non armé de manière à former le premier bloc de construction et, en deuxième lieu, à plonger la tige en fibre de verre dans ce premier bloc de construction avant que le béton non armé ne durcisse de sorte à maintenir ladite tige en fibre de verre noyée dans ledit premier bloc de construction. La réalisation du deuxième bloc de construction comprend, ensuite, une étape consistant à couler le béton non armé de manière à former le deuxième bloc de construction en y ménageant une réservation à l'intérieur de laquelle peut au moins partiellement être logée la tige en fibre de verre.

L'association structurelle des premier et deuxième blocs de construction comprend, ensuite, plusieurs étapes consistant, en premier lieu, à introduire le produit de scellement dans la réservation du deuxième bloc de construction puis, en deuxième lieu, à superposer le deuxième bloc de construction sur le premier bloc de construction en logeant la tige en fibre de verre à l'intérieur de la réservation formée dans le deuxième bloc de construction de sorte à sceller ladite tige en fibre de verre dans le deuxième bloc de construction.

Selon une réalisation alternative, la réalisation du premier bloc de construction comprend plusieurs étapes consistant, en premier lieu, à couler le béton non armé de manière à former le premier bloc de construction en y ménageant une réservation à l'intérieur de laquelle peut au moins partiellement être logée la tige en fibre de verre. La réalisation du deuxième bloc de construction comprend, ensuite, une étape consistant à couler le béton non armé de manière à former le deuxième bloc de construction en y ménageant une réservation à l'intérieur de laquelle peut au moins partiellement être logée la tige en fibre de verre. L'association structurelle des premier et deuxième blocs de construction comprend, ensuite, plusieurs étapes consistant, en premier lieu, à superposer le deuxième bloc de construction sur le premier bloc de construction en positionnant de manière coaxiale les réservations desdits premier et deuxième blocs de construction puis, en deuxième lieu, à introduire le produit de scellement simultanément dans les réservations des premier et deuxième blocs de construction et, en troisième lieu, à introduire la tige en fibre de verre simultanément dans les réservations des premier et deuxième blocs de construction de sorte à sceller ladite tige en fibre de verre dans lesdits premier et deuxième blocs de construction.

Selon une réalisation, le procédé de fabrication comprend également plusieurs étapes consistant, en premier lieu, à disposer des moyens formant entretoise de manière à maintenir un écartement prédéterminé entre les premier et deuxième blocs de construction et, en deuxième lieu, à loger la tige en fibre de verre dans ces moyens formant entretoise de sorte à assurer une liaison mécanique desdits moyens formant entretoise avec ladite tige en fibre de verre, par adhérence de cette dernière avec le béton non armé et/ou le produit de scellement.

Selon une réalisation, le procédé comporte une étape additionnelle consistant, avant l'étape d'agglomération, à ajouter dans l'éco-granulat des sables secondaires différents du sable coquillier, représentant de 15% à 50% du poids total des sables coquillier et secondaires.

Selon une réalisation, le procédé de fabrication comporte une étape additionnelle consistant, avant l'étape d'association du sable coquillier avec les fibres de renfort, à éliminer quasiment tout élément filandreux naturel du sable coquillier.

Selon une réalisation, le procédé de fabrication comporte une étape additionnelle consistant, avant l'étape d'agglomération, à ajouter dans l'éco-granulat des granulats complémentaires formés à partir de coquilles de déchets conchylicoles entières et/ou en morceaux et présentant des dimensions supérieures à 4 mm.

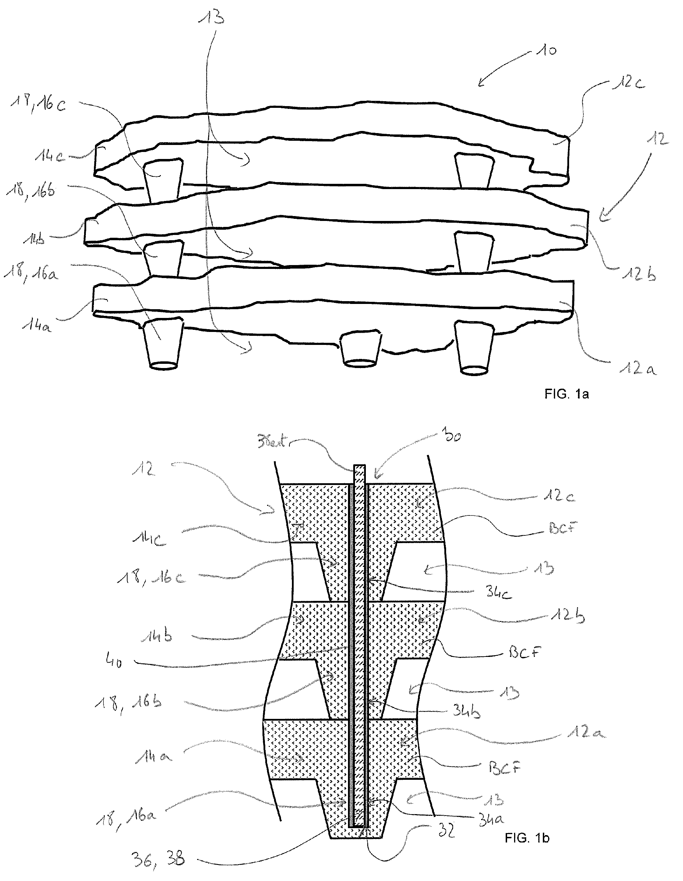

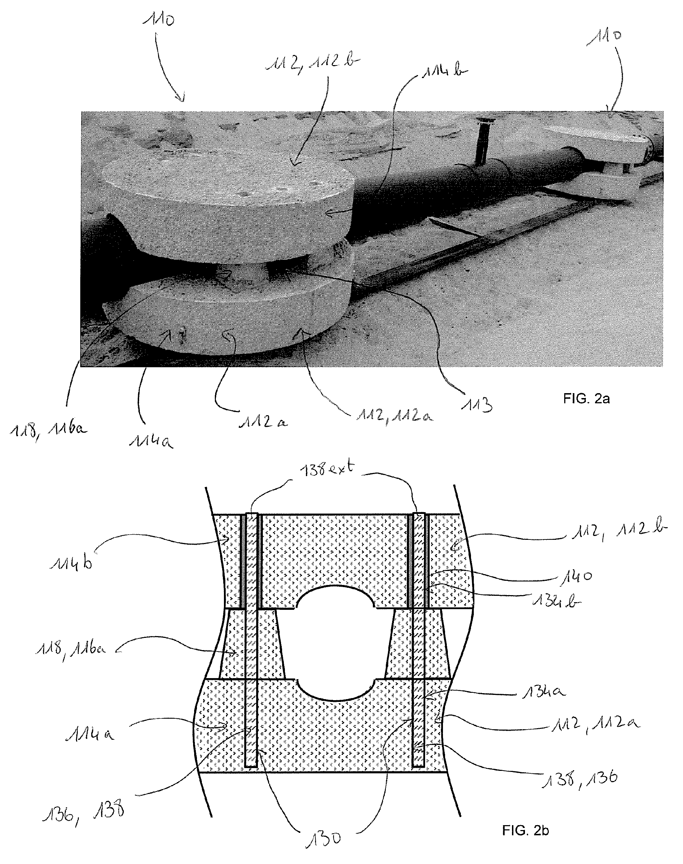

D'autres caractéristiques et avantages de l'invention ressortiront clairement de la description qui en est faite ci-après, à titre exemplatif et nullement limitatif, en référence aux dessins annexés, dans lesquels :
▪ La figure 1a représente une vue générale, en perspective, d'un premier mode de réalisation d'un ouvrage selon l'invention correspondant à un éco-récif et comprenant trois blocs de construction formé à partir d'un béton non armé ;
▪ La figure 1b représente une vue de détail, en coupe verticale, du premier mode de réalisation de l'ouvrage de la figure 1 a ;
▪ La figure 2a représente une vue générale, en perspective, de deux cavaliers destiné à maintenir une canalisation en milieu subaquatique, les cavaliers correspondant à un deuxième mode de réalisation d'un ouvrage selon l'invention comprenant deux blocs de construction formés à partir d'un béton non armé ;
▪ La figure 2b représente une vue de détail, en coupe verticale, du deuxième mode de réalisation de l'ouvrage de la figure 2a.

La composition d'un béton non armé BCF tel qu'utilisé pour la réalisation d'un ouvrage 10 selon l'invention est décrit en détail ci-après.

Il convient d'abord de noter que le terme de « béton non armé » s'oppose à celui de « béton armé » qui concerne l'association d'un béton avec une armature métallique. Selon l'invention, il convient donc d'entendre par béton non armé un béton qui n'est ni destiné ni de fait associé à une telle armature métallique.

Le béton non armé BCF comporte un liant et un éco-granulat formé à partir d'un sable coquillier, de graviers, de fibres de renfort et éventuellement d'autres composants. Il peut ainsi être qualifié de béton non armé coquillier fibré.

Dans la suite, le liant considéré sera un ciment. Toutefois, ce dernier pourrait être remplacé par d'autres types de liants - hydrauliques ou non - capables d'agglomérer l'éco-granulat, c'est-à-dire de souder les différents éléments formant cet éco-granulat.

Selon l'invention, l'éco-granulat utilisé est dépourvu de matériau métallique corrosif, ce qui permet d'éviter les effets négatifs de la corrosion sur l'armature métallique lorsque ce dernier est placé dans un milieu marin ou aquatique. Les propriétés mécaniques du béton non armé BCF se détériorent ainsi moins rapidement que celles des bétons armés de l'art antérieur même si le béton non armé BCF présente une épaisseur réduite. D'autre part, l'absence d'acier dans l'éco-granulat permet de s'affranchir de toute contrainte sur la teneur en chlorures dans le sable coquillier.

L'éco-granulat comprend, en premier lieu, du sable coquillier formé d'agrégats composés à partir de coquilles de déchets conchylicoles et présentant des dimensions allant de 160 micromètres à 4 millimètres. Les coquilles de déchets conchylicoles peuvent correspondre à des coquilles provenant de tout type de coquillages, tels que des huitres, des moules, des coquilles Saint-Jacques, des bigorneaux, des coques, des palourdes, des pétoncles, des praires, des tellines, des crépidules ou analogues. Selon différentes variantes de réalisation, le sable coquillier peut d'ailleurs être exclusivement formé à partir de coquilles correspondant à un unique type de coquillage (huitres, moules, coquilles Saint-Jacques, bigorneau, coques, palourdes, pétoncles, praire, tellines, crépidules ou analogues) ou au contraire correspondre à une combinaison de plusieurs types de coquillages différents.

Grâce à l'utilisation du sable coquillier, le béton non armé BCF est respectueux de l'environnement et favorise le développement de la faune et la flore.

Selon une réalisation, l'éco-granulat est formé à partir d'une combinaison de sable coquillier et d'un ou plusieurs sable(s) secondaire(s), tel que du sable de silice ou tout autre sable habituellement utilisé pour la réalisation de béton. Ainsi, le sable coquillier peut ne représenter qu'une portion allant de 15 % à 50 % du poids total des sables coquillier et secondaire(s). Une telle proportion garantie effectivement le développement de la faune et la flore sans réduire la durée de vie du béton non armé BCF.

L'éco-granulat comprend, en second lieu, des graviers tels que ceux traditionnellement utilisés par l'homme du métier pour la réalisation de béton. Les graviers représentent ainsi entre 40 % et 60 % du poids total de l'éco-granulat et permettent de consolider la structure du béton ; notamment d'améliorer ses propriétés mécaniques en compression.

Les formes, les dimensions et les proportions des graviers susceptibles d'entrer dans la composition du béton non armé BCF selon l'invention sont multiples et bien connues de l'homme du métier ; elles ne seront donc pas davantage détaillées.

L'éco-granulat comprend, en troisième lieu, des fibres de renfort réalisées à partir de fibres naturelles (coco ou autres), de fibres de verre, de fibres de céramique, de fibres de titane, de fibres de laiton, de fibres de polypropylène ou analogue. Les fibres de renfort intégrées dans l'éco-granulat sont soient toutes identiques, par exemple en polypropylène, soit différentes et utilisées en combinaison. Ces fibres de renfort sont de préférence souples afin de faciliter leur mélange avec l'éco-granulat et sont intégrées dans l'éco-granulat selon une disposition aléatoire.

Selon une réalisation, les fibres de renfort peuvent être de longueurs différentes, de préférence mais non exclusivement, comprises entre 1 centimètre et 10 centimètres et représentent avantageusement moins de 5 % du poids total de l'éco-granulat, en particulier de 0,2 % à 1 % du poids total de l'éco-granulat.

L'éco-granulat peut, en outre, comprendre des granulats complémentaires formés à partir de coquilles de déchets conchylicoles entières et/ou partiellement broyées en morceaux de sorte que les granulats complémentaires présentent des dimensions supérieures à 4 mm. Du fait de leur forme incurvée, ces granulats complémentaires permettent de favoriser le développement de la faune et la flore à proximité du béton non armé BCF.

Grâce à l'association du liant et de l'éco-granulat tel que décrits, le béton non armé BCF est tout à la fois respectueux de l'environnement et suffisamment résistant pour permettre de réaliser des formes complexes sur des épaisseurs réduites. Il est ainsi inutile d'avoir recours à une armature métallique.

Il convient de noter que, selon une réalisation, le sable coquillier utilisé pour la réalisation de l'éco-granulat présente une teneur en matières organiques inférieure ou égale à 5 %, ce qui assure une tenue des propriétés mécaniques du béton non armé BCF dans le temps. Plus particulièrement, pour obtenir une telle teneur en matière organique, le sable coquillier peut être formé à partir de coquilles de déchets conchylicoles traitées par dégradation aérobie ce qui assure un traitement simple, peu coûteux et respectueux de l'environnement.

La figure 1a représente un premier mode de réalisation d'un ouvrage 10 selon l'invention.

Selon cette réalisation, l'ouvrage 10 est un éco-récif destiné à être placé dans un milieu subaquatique tel qu'un milieu marin, en vue de former avec d'autres éco-récifs identiques ou différents une barrière structurelle capable, d'une part, d'empêcher les bateaux d'entrer dans une zone maritime prédéterminée et, d'autre part, de favoriser le développement et la colonisation de la faune et la flore au sein de cette zone maritime.

L'ouvrage 10 comporte trois blocs de construction 12 formés à partir du béton non armé BCF tel que décrit précédemment et empilés les uns sur les autres à la verticale afin de former des espaces de réception 13 susceptibles d'accueillir de la faune et la flore aquatique. Selon la réalisation de la figure 1a, les blocs de construction 12 sont entièrement formés à partir du béton non armé BCF tel décrit précédemment. Toutefois, selon une autre réalisation, ces blocs de constructions 12 pourraient également être formés par un corps plein réalisé à partir d'un ou plusieurs matériaux différents, puis recouverts du béton non armé BCF.

En outre, selon une réalisation avantageuse, le béton non armé BCF formant la surface extérieure des blocs de construction 12 pourrait subir des traitements de surface permettant d'obtenir un spectre de porosité externe hétérogène, permettant d'accroitre la colonisation de l'ouvrage 10 par la faune et la flore aquatique.

L'ouvrage 10 présente un premier bloc de construction 12a à positionnement inférieur, un deuxième bloc de construction 12b à positionnement intermédiaire et un troisième bloc de construction 12c à positionnement supérieur. Le troisième bloc de construction 12c repose sur le deuxième bloc de construction 12b et le deuxième bloc de construction 12b est lui-même supporté par le premier bloc de construction 12a.

Selon la réalisation de la figure 1a, les blocs de construction 12 composant l'ouvrage 10 présentent une structure sensiblement identique et sont agencés les uns au-dessus des autres afin de constituer des espaces de réception 13 permettant d'accueillir la faune et la flore aquatique.

Ainsi, le troisième bloc de construction 12c présente un plateau 14c s'étendant dans un plan horizontal et trois pieds 16c s'étendant depuis la face inférieure du plateau 14c. Les pieds 16c ont pour fonction d'assurer le maintien du troisième bloc de construction 12c à une distance prédéterminée du deuxième bloc de construction 12b pour définir un espace de réception 13. Chaque pied 16c du troisième bloc de construction 12c constitue donc des moyens formant entretoise 18 capables de maintenir le plateau 14c de ce troisième bloc de construction 12c à une distance prédéterminée du deuxième bloc de construction 12b.

Ces pieds 16c forment, par ailleurs, avec le plateau 14c un seul et unique corps et sont, d'ailleurs, réalisés lors d'une même opération de coulage du béton non armé BCF. Alternativement, les moyens formant entretoise 18 pourraient également constituer des pièces distinctes des blocs de construction 12 et ne pas être réalisés en béton non armé BCF.

Le deuxième bloc de construction 12b présente lui-aussi un plateau 14b s'étendant dans un plan horizontal et trois pieds 16b s'étendant depuis la face inférieure du plateau 14b pour assurer le maintien du deuxième bloc de construction 12b à une distance prédéterminée du premier bloc de construction 12a. Par ailleurs, les pieds 16b du deuxième bloc de construction 12b constituent, eux-aussi, des moyens formant entretoise 18 capables de maintenir le plateau 14b à une distance prédéterminée du premier bloc de construction 12a.

Comme précédemment, les pieds 16b et le plateau 14b forment un seul et unique corps réalisé lors d'une même opération de coulage béton non armé BCF mais les moyens formant entretoise 18 pourraient également constituer des pièces distinctes non réalisées en béton non armé BCF.

Enfin, le premier bloc de construction 12a présente aussi un plateau 14a s'étendant dans un plan horizontal et trois pieds 16a s'étendant depuis la face inférieure du plateau 14a pour assurer le maintien du premier bloc de construction 12a à une distance prédéterminée de la surface de support sur laquelle il repose, en l'espèce le sol marin. Les pieds 16a du troisième bloc de construction 12a constituent, à ce titre, des moyens formant entretoise 18 capables de maintenir le plateau 14a à une distance prédéterminée du sol marin.

Comme précédemment, les pieds 16a et le plateau 14a sont réalisés lors d'une même opération de coulage du béton non armé BCF mais pourraient alternativement constituer des pièces distinctes réalisées dans un matériau différent.

Chaque bloc de construction 12 possède des moyens d'association rigide réciproques 30.

Les moyens d'association rigide réciproques 30 présentent un organe femelle 32 et un organe mâle 36 complémentaires aptes à coopérer les uns avec les autres et agencés de manière à assurer l'association et le maintien d'un bloc de construction 12 à d'autres blocs de construction 12 similaires ou différents. Il est ainsi possible de constituer l'ouvrage 10 en assemblant une pluralité de blocs de construction 12 similaires ou différents.

Plus particulièrement, ces moyens d'association rigide réciproques 30 - au nombre de trois par bloc de construction 12 - permettent de former une liaison mécanique entre les différents blocs de construction 12 de l'ouvrage 10 de manière à renforcer sa rigidité, permettre sa mise à l'eau sans risque de rupture et assurer sa tenue structurelle lorsqu'il se trouve en position dans l'eau.

La figure 1b représente l'un des trois moyens d'association rigide réciproques 30 de chacun des premier, deuxième et troisième blocs de construction 12a, 12b, 12c.

Il en ressort que les organes femelles 32 sont constitués par des réservations 34 formées dans le béton non armé BCF et agencées de manière coaxiales dans les premier, deuxième et troisième blocs de construction 12a, 12b, 12c. Ainsi, une première réservation 34a traverse entièrement le plateau 14a et seulement partiellement le pied 16a du premier bloc de construction 12a. Une deuxième réservation 34b traverse, de part en part, le plateau 14b et le pied 16b du deuxième bloc de construction 12b jusqu'à déboucher sur la première réservation 34a aménagée dans le premier bloc de construction 12b. Une troisième réservation 34c traverse également, de part en part, le plateau 14c et le pied 16c du premier bloc de construction 12b, puis débouche sur la deuxième réservation 34b aménagée dans le deuxième bloc de construction 12b.

L'organe mâle 36 représenté sur la figure 1b est formé par une tige en fibre de verre 38, s'étendant à la verticale et logé dans les première, deuxième et troisième réservations 34a, 34b, 34c. Seule une portion extrême supérieure 38ext s'épanouit en dehors des première, deuxième et troisième réservations 34a, 34b, 34c, ce qui permet d'y fixer des moyens de levage de l'ouvrage 10 en vue de sa mise à l'eau.

La tige en fibre de verre 38 est maintenue en position à l'intérieur desdites première, deuxième et troisième réservations 34a, 34b, 34c par l'intermédiaire d'un produit de scellement 40. La tige en fibre de verre 38 est donc scellée dans les première, deuxième et troisième réservations 34a, 34b, 34c des premier, deuxième et troisième blocs de construction 12a, 12b, 12c.

De ce fait, le produit de scellement 40 permet de relier structurellement, par adhérence, la tige en fibre de verre 38 avec la surface intérieure des première, deuxième et troisième réservations 34a, 34b, 34c, ce qui permet de minimiser les efforts exercés par les troisième et deuxième blocs de construction 12c, 12b sur le premier bloc de construction 12a lors de l'opération de levage de l'ouvrage 10. En effet, les efforts de gravité sont alors majoritairement exercés, par adhérence, sur la tige en fibre de verre 38 relié aux moyens de levage.

Le procédé de fabrication de l'ouvrage 10 illustré par les figure 1a et 1b est décrit en détail.

Plus particulièrement, ce procédé de fabrication comprend d'abord une première étape de fabrication du béton non armé BCF selon l'invention.

Le procédé consiste ainsi à disposer des fibres de renfort telle que décrites précédemment en vue de leur association avec les graviers, le sable coquillier, éventuellement le(s) sable(s) secondaire(s) et les granulats complémentaires formant l'éco-granulat.

Le procédé consiste en deuxième lieu à disposer de produits conchylicoles en vue de former un sable coquillier tel que décrit précédemment. Pour ce faire, les produits conchylicoles sont mis en tas à l'air libre et la dégradation de la partie externe organique initialement attachée à eux se fait naturellement, avec un dégagement d'ammoniac qui entretient la réaction. Afin de maintenir cette réaction de dégradation aérobie (due à des bactéries spécifiques) le tas est aéré par des courants d'air. Ces flux d'air sont maintenus jusqu'à obtenir la dégradation complète de la partie organique des produits. Cette phase s'étend, de préférence, sur une durée minimum de vingt jours. Pendant cette phase les coquilles subissent une maturation pendant laquelle une altération des composés minéraux et organiques se produit. À l'issue de cette phase les coquilles sont broyées jusqu'à obtenir des agrégats dont la granulométrie finale va de 160 micromètres à 4 millimètres. Éventuellement, les agrégats du sable coquillier présentant des dimensions supérieures à 4 millimètres et inférieures à 160 micromètres sont éliminés par un processus connu de l'homme du métier. La phase suivante consiste à rincer à l'eau douce la poudre ainsi obtenue, afin d'en éliminer les chlorures et les traces de matière organique dégradée. Ce procédé - notamment le traitement par dégradation aérobie des composés minéraux et organiques initialement présent dans les produits conchylicoles - permet d'obtenir un sable coquillier dont la teneur en matière organique est inférieure à 5%.

Le sable coquillier ainsi obtenu est utilisée pour entrer dans la composition d'un éco-granulat comprenant des graviers et, éventuellement un pourcentage de sable(s) secondaire(s) et de granulats complémentaires réalisés à partir de coquilles de déchets conchylicoles supérieures à 4 millimètres.

Selon une réalisation, le(s) sable(s) secondaire(s) et les granulats complémentaires ajoutés sont tels que la proportion de sable coquillier dans l'éco-granulat représente de 15% à 50% du poids total des sables coquillier et secondaire(s).

Selon une réalisation, tous les éléments filandreux tels que les algues, les déchets plastiques ou analogue sont ensuite éliminés du sable coquillier afin de ne pas gêner l'association de ce sable coquillier avec les fibres de renfort. Puis des fibres de renfort souples telles que précédemment décrites sont intégrées et mélangées dans l'éco-granulat, après quoi l'éco-granulat est lui-même aggloméré par l'intermédiaire d'un liant, tel que du ciment, de manière à constituer le béton non armé BCF.

Le béton non armé BCF ainsi réalisé est peu couteux, performant mécaniquement et peut ainsi être utilisé pour aménager des fonds marins tout en formant un support performant pour l'écosystème.

Cette première étape de fabrication peut naturellement être modifiée ou complétée afin d'obtenir un béton non armé BCF selon les différentes variantes précédemment présentées.

À partir de ce béton non armé BCF, le procédé de fabrication consiste ensuite à réaliser les premier, deuxième et troisième blocs de construction 12a, 12b, 12c. Cette étape peut être réalisée par coulage, comme décrit ci-après, mais elle pourrait également être faite différemment, notamment par pompage, projection ou tout autre procédé permettant d'obtenir un ouvrage selon l'invention.

Plus particulièrement, il s'agit en premier lieu de couler le béton non armé BCF de manière à former le premier bloc de construction 12a - comprenant le plateau 14a et ses trois pieds 16a - en y ménageant trois réservations 36a ne débouchant pas jusqu'à l'extrémité des pieds 16c et à l'intérieur desquelles peuvent être logés trois tiges en fibre de verre 38 distinctes. Il convient ensuite de couler le béton non armé BCF de manière à former le deuxième bloc de construction 12b - à savoir le plateau 14b et ses trois pieds 16b - en y ménageant, de part en part, trois réservations 36b susceptibles de recevoir trois tiges en fibre de verre 38 distinctes. Il faut enfin couler le béton non armé BCF de manière à former le troisième bloc de construction 12c - c'est-à-dire le plateau 14c et les trois pieds 16c - en y ménageant, de part en part, trois réservations 36c susceptibles de recevoir trois tiges en fibre de verre 38 distinctes.

Il convient ensuite d'assurer l'assemblage structurel de ces trois blocs de construction 12a, 12b, 12c.

Pour ce faire, il convient en premier lieu de superposer le deuxième bloc de construction 12b sur le premier bloc de construction 12a de sorte que les trois réservations 36b, 36a de ces deuxième et premier blocs de construction 12b, 12a soient coaxiales. Il faut, en outre, agencer le troisième bloc de construction 12c sur le deuxième bloc de construction 12b, là encore de sorte que les trois réservations 36c, 36b de ces troisième et deuxième blocs de construction 12c, 12b soient coaxiales.

L'étape suivante consiste alors à introduire le produit de scellement 40 à l'intérieur de ces réservations 36a, 36b, 36c, puis d'intégrer trois tiges en fibre de verre 38 dans les réservations 36a, 36b, 36c, correspondantes des premier, deuxième et troisième blocs de construction 12a, 12b, 12c de sorte à assurer l'association structurelle desdits premier, deuxième et troisième blocs de construction 12a, 12b, 12c.

Outre les bénéfices qui résultent de l'utilisation du béton non armé BCF pour le développement de la faune et la flore et la durée de vie de l'ouvrage en milieu subaquatique, ce procédé de fabrication permet de réduire les risques de rupture de l'ouvrage en assurant une bonne adhérence des blocs de construction 12 avec la tige en fibre de verre 38, notamment lors de l'opération de levage qui vise à le placer en milieu subaquatique. En outre, un tel procédé de fabrication présente l'avantage de réaliser l'assemblage des premier, deuxième et troisième blocs de construction 12a, 12b, 12c en une seule opération.

La figure 2a représente un deuxième mode de réalisation d'un ouvrage 110 selon l'invention.

Selon la figure 2a, l'ouvrage 110 forme des cavaliers destinés à être placés dans un milieu subaquatique tel qu'un milieu marin, en vue de constituer un lest pour une canalisation sous-marine permettant, d'une part, de limiter les contraintes imposer à la canalisation par la houle et d'empêcher cette canalisation de remonter à la surface et, d'autre part, de favoriser le développement et la colonisation de la faune et la flore à proximité de cette canalisation.

L'ouvrage 110 comporte deux blocs de construction 112 formés à partir du béton non armé BCF tel que décrit précédemment et empilés les uns sur les autres à la verticale afin de former des espaces de réception 113 susceptibles d'enfermer une portion de la canalisation. Selon la réalisation de la figure 2a, les deux blocs de construction 112 sont entièrement formés à partir du béton non armé BCF et séparés l'un de l'autre d'un écartement prédéterminé. Toutefois, selon une autre réalisation, l'un des deux blocs de construction 112 ou bien les éléments formant entretoise 118 pourraient également être formés par un corps plein réalisé à partir d'un ou plusieurs matériaux différent(s), puis éventuellement recouverts du béton non armé BCF décrit précédemment.

En outre, selon une réalisation avantageuse, le béton non armé BCF formant la surface extérieure des blocs de construction 112 pourrait subir des traitements de surface permettant d'obtenir un spectre de porosité externe hétérogène, permettant d'accroitre la colonisation de l'ouvrage 110 par la faune et la flore aquatique.

L'ouvrage 110 présente un premier bloc de construction 112a à positionnement inférieur, un deuxième bloc de construction 112b à positionnement supérieur. Le deuxième bloc de construction 112b repose sur le premier bloc de construction 112a qui est lui-même destiné à être supporté par le sol marin.

Selon la réalisation de la figure 2a, les blocs de construction 112 composant l'ouvrage 110 présentent des structures différentes et sont agencés les uns au-dessus des autres afin de constituer un espace de réception 113 permettant d'accueillir la canalisation.

Ainsi, le premier bloc de construction 112a présente un plateau 114a s'étendant dans un plan horizontal et quatre pieds 116a s'étendant depuis la face supérieure du plateau 114a. Et le deuxième bloc de construction 112b présente lui-aussi un plateau 114b s'étendant dans un plan horizontal. Les pieds 116a du premier bloc de construction 112a ont pour fonction d'assurer le maintien du deuxième bloc de construction 112b à une distance prédéterminée du premier bloc de construction 112a de manière à définir un espace de réception 113 permettant d'accueillir la canalisation. Chaque pied 116a du premier bloc de construction 112a constitue donc des moyens formant entretoise 118 capables de maintenir le plateau 114b du deuxième bloc de construction 112b à une distance prédéterminée du premier bloc de construction 112a.

Selon cette réalisation, lesdits pieds 116a forment avec le plateau 114a un seul et unique corps et ont également été réalisés lors d'une même opération de coulage du béton non armé BCF. Toutefois, il convient de noter qu'alternativement, les moyens formant entretoise 118 pourrait également constituer des pièces distinctes des blocs de construction 112 et non réalisées en béton non armé BCF.

Chaque bloc de construction 112 possède des moyens d'association rigide réciproques 130.

Les moyens d'association rigide réciproques 130 présentent un organe femelle 132 et un organe mâle 136 complémentaires aptes à coopérer les uns avec les autres et agencés de manière à assurer l'association et le maintien d'un bloc de construction 112 à d'autres blocs de construction 112 similaires ou différents. Il est ainsi possible de constituer l'ouvrage 110 en assemblant une pluralité de blocs de construction 112 similaires ou différents.

Plus particulièrement, ces moyens d'association rigide réciproques 130 - au nombre de quatre par bloc de construction 112 - permettent de former une liaison mécanique entre les différents blocs de construction 112 de l'ouvrage 110 de manière à renforcer sa rigidité, permettre sa mise à l'eau sans risque de rupture et assurer sa tenue structurelle lorsqu'il se trouve en position dans l'eau.

La figure 2b représente deux des quatre moyens d'association rigide réciproques 130 de chacun des premier et deuxième blocs de construction 112a, 112b.

Il en ressort que les organes femelles 132 du premier bloc de construction 112a sont constitués par quatres logements 134a formés dans le béton non armé BCF et agencés de manière coaxiale avec les organes femelles 132 du deuxième bloc de construction 112b constitués par quatre réservations 134b également agencées dans le béton non armé BCF. Ainsi, les quatre réservations 134b traversent de part en part le plateau 114b du deuxième bloc de construction 112a jusqu'à déboucher sur les quatre logements 134a aménagés dans les pieds 116a et le plateau 116a du premier bloc de construction 112a.

Les organes mâles 136 sont formés par quatre tiges en fibre de verre 138, s'étendant à la verticale et logés dans les réservations 134b du deuxième bloc de construction 112b et les logements 134a du premier mode construction 112a. Seule une portion extrême supérieure 138ext des tiges en fibre de verre 138 s'épanouit en dehors des quatre réservations 134b du deuxième bloc de construction 112b ce qui permet d'y fixer des moyens de levage de l'ouvrage 110 en vue de sa mise à l'eau.

Les tiges en fibre de verre 138 sont maintenues en position à l'intérieur des logements 134a du premier bloc de construction 112a car elle se trouve noyées dans le béton non armé BCF. En revanche, lesdites tiges en fibres de verre 138 sont maintenues dans les réservations 134b du deuxième bloc de construction 112b par l'intermédiaire d'un produit de scellement 140. Les tiges en fibre de verre 38 sont donc scellées dans les première et deuxième blocs de construction 112a, 112b soit par l'intermédiaire du béton non armé BCF, soit par l'intermédiaire du produit de scellement 140.

De ce fait, le béton non armé BCF et le produit de scellement 140 permettent de relier structurellement, par adhérence, les tiges en fibre de verre 138 avec la surface intérieure des réservations 134a et des logements 134b formées dans les premier et deuxième blocs de construction 112a, 112b. Cette configuration permet de minimiser les efforts exercés par le premier bloc de construction 112a sur le deuxième bloc de construction 112b, notamment lors de l'opération de levage de l'ouvrage 110.

Le procédé de fabrication de l'ouvrage 110 illustré par les figure 2a et 2b est décrit en détail.

Plus particulièrement, ce procédé de fabrication comprend d'abord une première étape de fabrication du béton non armé BCF selon l'invention.

Cette première étape de fabrication ayant déjà été décrite en référence aux figure 1a et 1b, elle ne sera pas davantage détaillée ici. Il convient simplement de rappeler que cette étape de fabrication peut naturellement être modifiée ou complétée afin d'obtenir un béton non armé BCF selon les différentes variantes précédemment présentées.

À partir de ce béton non armé BCF, le procédé de fabrication consiste ensuite à réaliser les premier, et deuxième blocs de construction 112a, 112b. Cette étape peut être réalisée par coulage, comme décrit ci-après, mais elle pourrait également être faite différemment, notamment par pompage, projection ou tout autre procédé permettant d'obtenir un ouvrage selon l'invention.

Plus particulièrement, il convient d'abord de couler le béton non armé BCF de manière à former le premier bloc de construction 112a - à savoir le plateau 114a et les pieds 116a - puis de plonger les quatre tiges en fibre de verre 138 dans ce premier bloc de construction 112a avant que le béton non armé BCF ne durcisse de sorte à maintenir les quatre tiges en fibre de verre 138 noyées dans les logements 134a correspondants dudit premier bloc de construction 112a.

Il faut ensuite couler le béton non armé BCF de manière à former le deuxième bloc de construction 112b - comprenant le plateau 114b seulement - en y ménageant, de part en part, quatre réservations 136b susceptibles de recevoir quatre tiges en fibre de verre 138 distinctes.

Il s'agit ensuite d'assurer l'assemblage structurel de ces deux blocs de construction 112a, 112b.

Pour ce faire, il convient en premier lieu d'introduire le produit de scellement dans les réservations 134b du deuxième bloc de construction 112b. Il faut ensuite superposer le deuxième bloc de construction 112b sur le premier bloc de construction 112a en veillant à loger les quatre tiges en fibre de verre 138 - partiellement noyées dans le premier bloc de construction 112a - à l'intérieur des quatre réservations 134b agencées dans le deuxième bloc de construction 112b de sorte à sceller ladite tige en fibre de verre 138 dans le deuxième bloc de construction.

Outre les bénéfices qui résultent de l'utilisation du béton non armé BCF pour le développement de la faune et la flore et la durée de vie de l'ouvrage en milieu subaquatique, ce procédé de fabrication permet - comme précédemment - de réduire les risques de rupture de l'ouvrage en assurant une bonne adhérence des blocs de construction avec les tiges en fibre de verre, notamment lors de l'opération de levage qui vise à le placer en milieu subaquatique. En outre, ce procédé de fabrication permet moduler la fabrication des blocs de construction et/ou l'assemblage de ces derniers en assurant, dès la réalisation de l'un des blocs de construction, le maintien des tiges en fibre de verre noyées dans le béton non armé BCF.

## Revendications

1. **Ouvrage** (10, 110) spécialement destiné à une utilisation en **milieu subaquatique** comportant au moins **deux blocs de construction** (12, 12a, 12b, 12c ; 112, 112a, 112b) formés à partir d'un **béton non armé** (BCF) comprenant un **liant** et un **éco-granulat** aggloméré par le liant ;
dans lequel l'éco-granulat, qui est **dépourvu d'élément métallique,** comprend du **gravier,** des **fibres de renfort** et du **sable coquillier** composé d'agrégats formés à partir de coquilles de déchets conchylicoles et présentant des dimensions allant de 160 micromètres à 4 millimètres ;
**caractérisé en ce que** les deux blocs de construction (12, 12a, 12b, 12c ; 112, 112a, 112b) comprennent des **moyens d'association rigide réciproques** (30, 130) présentant un **organe femelle** (32 ; 132) et un **organe mâle** (36, 136) aptes à coopérer pour assurer **l'association structurelle des blocs de construction** (12, 12a, 12b, 12c ; 112, 112a, 112b) l'un avec l'autre, l'organe mâle (36, 136) étant formé par une **tige en fibre de verre** (38 ; 138) partiellement scellée dans le béton non armé (BCF),
la tige en fibre de verre comprenant une portion extrême supérieure (38ext ;138ext) s'épanouissant en dehors des réservations (34c ;134b), ce qui permet d'y fixer des moyens de levage.

2. Ouvrage selon la revendication 1, dans lequel la **tige en fibre de verre** (38 ; 138) est au moins partiellement **logée** dans les deux blocs de construction (12, 12a, 12b, 12c; 112, 112a, 112b) de sorte à assurer une liaison mécanique desdits blocs de construction (12, 12a, 12b, 12c ; 112, 112a, 112b) avec ladite tige en fibre de verre (38 ; 138), **par adhérence** de cette dernière avec le béton non armé (BCF) et/ou avec un **produit de scellement** (40 ; 140).

3. Ouvrage selon la revendication 2, dans lequel l'**organe femelle** (32 ; 132) des moyens d'association rigide réciproques (30, 130) comporte une **réservation** (34a, 34b, 34c ; 134a) formée dans l'un des blocs de construction (12, 12a, 12b, 12c ; 112, 112b) et à l'intérieure de laquelle sont agencés la tige en fibre de verre (38 ; 138) et le produit de scellement (40 ; 140).

4. Ouvrage selon la revendication 3, dans lequel la **tige en fibre de verre** (138) est par ailleurs **noyée** dans le béton non armé (BCF) formant l'autre des blocs de construction (112a).

5. Ouvrage selon la revendication 2, dans lequel l'organe femelle des moyens d'association rigide réciproques comporte des **réservations coaxiales** (34a, 34b, 34c) formées dans chacun des blocs de construction (12, 12a, 12b, 12c) et à l'intérieure desquelles sont agencés la tige en fibre de verre (38) et le produit de scellement (40).

6. Ouvrage selon l'une quelconque des revendications 1 à 5, comprenant des **moyens formant entretoise** (18 ; 118) aptes à maintenir un écartement prédéterminé entre les deux blocs de construction (12, 12a, 12b, 12c ; 112, 112a, 12b).

7. Ouvrage selon la revendication 6, dans la **tige** en fibre de verre (38, 138) est partiellement logée **dans** les moyens formant **entretoise** (18, 118) de sorte à assurer une liaison mécanique dudit moyen formant entretoise (18, 118) avec ladite tige en fibre de verre (38, 138), par adhérence de cette dernière avec le béton non armé (BCF) et/ou avec un produit de scellement (40, 140).

8. Ouvrage selon la revendication 7, dans lequel la tige en fibre de verre (138) est noyée dans les moyens formant entretoise (118) de sorte à assurer une liaison mécanique dudit moyen formant entretoise (118) avec ladite tige en fibre de verre (138), par adhérence de cette dernière avec le béton non armé (BCF).

9. Ouvrage selon la revendication 7, dans lequel les moyens formant entretoise (18) présentent une réservation (34a, 34b, 34c) coaxiale à celle(s) du (ou des) bloc(s) de construction (12, 12a, 12b, 12c), la tige en fibre de verre (38) étant logée dans cette réservation (34a, 34b, 34c) et scellée par le produit de scellement (40) de sorte à assurer une liaison mécanique desdits moyens formant entretoise (18) avec ladite tige en fibre de verre (38), par adhérence de cette dernière avec le produit de scellement (40).

10. Ouvrage selon l'une quelconque des revendications 7 à 9, dans lequel les moyens formant entretoise sont formés à partir du béton non armé (BCF) et constituent une ou plusieurs(s) extension(s) de l'un des blocs de construction.

11. Ouvrage selon l'une quelconque des revendications 7 à 9, dans lequel les moyens formant entretoise sont structurellement distincts des blocs de construction et formés à partir d'un matériau différent du béton non armé (BCF).

12. Ouvrage selon l'une quelconque des revendications 1 à 11, dans lequel l'éco-granulat comprend également du ou **des sable(s) secondaire(s) différent(s) du sable coquillier,** le sable coquillier représentant de 15% à 50% du poids total des sables coquillier et secondaire(s).

13. Ouvrage selon l'une quelconque des revendications 1 à 12, dans lequel l'éco-granulat comporte également des granulats complémentaires formés à partir de **coquilles de déchets conchylicoles entières** et/ou en morceaux et présentant des dimensions supérieures à 4 mm.

14. Ouvrage selon l'une quelconque des revendications 1 à 13, dans lequel les fibres de renfort sont des **fibres naturelles** et/ou des **fibres en polypropylène.**

15. Ouvrage selon l'une quelconque des revendications 1 à 14, dans lequel les fibres de renfort présentent une longueur allant de 1 **centimètre à 10 centimètres.**

16. Ouvrage selon l'une quelconque des revendications 1 à 15, dans lequel les **fibres** de renfort représentent **moins de 5 % du poids total** de l'éco-granulat, en particulier de 0,2% à 1% du poids totale de l'éco-granulat.

17. Ouvrage selon l'une quelconque des revendications 1 à 16, dans lequel l'un et/ou l'autre des au moins deux blocs de construction présente(nt) un **corps plein** recouvert par un **revêtement de surface** formé à partir du béton non armé (BCF).

18. Ouvrage selon l'une quelconque des revendications 1 à 16, dans lequel l'un et/ou l'autre des au moins deux blocs de construction (12, 12a, 12b, 12c ; 112, 12a, 12b) présente(nt) un corps plein formé à partir du béton non armé (BCF).

19. **Procédé** de fabrication d'un ouvrage (10 ; 110) destiné à une utilisation dans un milieu subaquatique selon l'une quelconque des revendications 1 à 18, comprenant une pluralité d'étape consistant à :
broyer des produits conchylicoles jusqu'à obtenir un sable coquillier comprenant des agrégats présentant des dimensions allant de 160 micromètres à 4 millimètres, associer le sable coquillier, du gravier et des fibres de renfort de manière à former un éco-granulat et agglomérer l'éco-granulat par l'intermédiaire d'un liant de manière à constituer un béton non armé (BCF) ;
réaliser, à partir du béton non armé (BCF), un premier bloc de construction (12, 12a ; 112, 112a) comprenant des moyens d'association rigide réciproques (30 ; 130) formés par une tige en fibre de verre (38 ; 138) ; la tige en fibre de verre comprenant une portion extrême supérieure (38ext ;138ext) s'épanouissant en dehors des réservations (34c ;134b), ce qui permet d'y fixer des moyens de levage,
réaliser, à partir dudit béton armé (BCF), un deuxième bloc de construction (12, 12b ; 112, 112b) comprenant des moyens d'association rigide réciproques (30 ; 130) formés par une réservation (34b ; 134b) agencée dans le deuxième bloc de construction (12, 12b ; 112, 112b) et à l'intérieur de laquelle peut au moins partiellement être logée la tige en fibre de verre (38 ; 138) ;
assembler les premier et deuxième blocs de construction (12, 12a, 12b ; 112, 112a, 112b) par scellement de la tige en fibre de verre (38 ; 138) des moyens d'association rigide réciproques (30 ; 130) du premier bloc de construction (12, 12b; 112, 112b) dans la réservation (34b ; 134b) des moyens d'association rigide réciproques (30 ; 130) du deuxième bloc de construction (12, 12b ; 112, 112b) de sorte à assurer l'association structurelle desdits premier et deuxième blocs de construction (12, 12a, 12b ; 112, 112a, 112b).

20. Procédé de fabrication selon la revendication 19, dans lequel la réalisation du premier bloc de construction (112, 112a) comprend plusieurs étapes consistant, en premier lieu, à couler le béton non armé (BCF) de manière à former le premier bloc de construction (112, 112a) et, en deuxième lieu, à plonger la tige en fibre de verre (138) dans ce premier bloc de construction (112, 112a) avant que le béton non armé (BCF) ne durcisse de sorte à maintenir la tige en fibre de verre (138) noyée dans ledit premier bloc de construction (112, 112a),
dans lequel la réalisation du deuxième bloc de construction (112, 112b) comprend, ensuite, une étape consistant à couler le béton non armé (BCF) de manière à former le deuxième bloc de construction (112, 112b) en y ménageant une réservation (134b) à l'intérieur de laquelle peut au moins partiellement être logée la tige en fibre de verre (138),
dans lequel l'association structurelle des premier et deuxième blocs de construction (112, 112a, 112b) comprend, ensuite, plusieurs étapes consistant, en premier lieu, à introduire le produit de scellement (140) dans la réservation (134b) du deuxième bloc de construction (112, 112b) puis, en deuxième lieu, à superposer le deuxième bloc de construction (112, 112b) sur le premier bloc de construction (112, 112a) en logeant la tige en fibre de verre (138) à l'intérieur de la réservation (134b) formée dans le deuxième bloc de construction (112, 112b) de sorte à sceller ladite tige en fibre de verre (138) dans le deuxième bloc de construction (112, 112b).

21. Procédé de fabrication selon la revendication 19, dans lequel la réalisation du premier bloc de construction (12, 12a) comprend plusieurs étapes consistant, en premier lieu, à couler le béton non armé (BCF) de manière à former le premier bloc de construction (12, 12a) en y ménageant une réservation (34a) à l'intérieur de laquelle peut au moins partiellement être logée la tige en fibre de verre (38) puis,
dans lequel la réalisation du deuxième bloc de construction (12, 12b) comprend, ensuite, une étape consistant à couler le béton non armé (BCF) de manière à former le deuxième bloc de construction (12, 12b) en y ménageant une réservation (34b) à l'intérieur de laquelle peut au moins partiellement être logée la tige en fibre de verre (38),
dans lequel l'association structurelle des premier et deuxième blocs de construction 12, 12a, 12b) comprend, ensuite, plusieurs étapes consistant, en premier lieu, à introduire le produit de scellement (40) simultanément dans les réservations (34a, 34b) des premier et deuxième blocs de construction (12, 12a, 12b) et, en troisième lieu, à introduire ladite tige en fibre de verre (38) simultanément dans les réservations (34a, 34b) des premier et deuxième blocs de construction (12, 12a, 12b) de sorte à sceller ladite tige en fibre de verre (38) dans lesdits premier et deuxième blocs de construction (12, 12a, 12b)

22. Procédé de fabrication selon l'une quelconque des revendications 19 à 21, comprenant plusieurs étapes consistant, en premier lieu, à disposer des moyens formant entretoise (18, 118) de manière à maintenir un écartement prédéterminé entre les premier et deuxième blocs de construction (12, 12a, 12b ; 112, 112a, 112b) et, en deuxième lieu, à loger la tige en fibre de verre (38 ; 138) dans ces moyens formant entretoise (18 ; 118) de sorte à assurer une liaison mécanique desdits moyens formant entretoise (18 ; 118) avec ladite tige en fibre de verre (38 ; 138), par adhérence de cette dernière avec le béton non armé (BCF) et/ou le produit de scellement (40, 140).

23. Procédé de fabrication selon l'une quelconque des revendications 19 à 22, comprenant une étape additionnelle consistant, avant l'étape d'agglomération, à ajouter dans l'éco-granulat des sables secondaires différents du sable coquillier, représentant de 15% à 50% du poids total des sables coquillier et secondaires.

24. Procédé de fabrication selon l'une quelconque des revendications 19 à 23, comprenant une étape additionnelle consistant, avant l'étape d'agglomération, à restreindre la teneur en matières organiques dans le sable coquillier à 5% du poids du sable coquillier.

25. Procédé de fabrication selon la revendication 24, dans lequel l'étape consistant à restreindre la teneur en matières organiques dans le sable coquillier à 5% du poids du sable coquillier est réalisée par dégradation aérobie des composés minéraux et organiques initialement présent dans les produits conchylicoles.

26. Procédé de fabrication selon l'une quelconque des revendications 19 à 25, comprenant une étape additionnelle consistant, avant l'étape d'association du sable coquillier avec les fibres de renfort, à éliminer quasiment tout élément filandreux du sable coquillier.

27. Procédé de fabrication selon l'une quelconque des revendications 19 à 26, comprenant une étape additionnelle consistant, avant l'étape d'agglomération, à ajouter dans l'éco-granulat des granulats complémentaires formés à partir de coquilles de déchets conchylicoles entières et/ou en morceaux et présentant des dimensions supérieures à 4 mm.

## Patentansprüche

1. Bauwerk (10, 110) insbesondere für den Unterwasserbereich umfasst mindestens zwei Baublöcke (12, 12a, 12b, 12c ; 112, 112a, 112b), die aus unbewehrtem Beton (BCF) geformt sind und Bindemittel und Ökogranulat als Pressbindemittel umfassen; wobei das Ökogranulat Kies ohne metallische Bestandteile enthält, nur Verstärkungsfasern und Muschelsand, bestehend aus Aggregaten aus Muschelabfällen, die die Größen von 160 Mikrometer bis 4 Millimeter enthalten; **dadurch gekennzeichnet, dass** beide Baublöcke (12, 12a, 12b, 12c; 112, 112a, 112b) gegenseitige, feste Verbindungsmittel (30, 130) umfassen, bestehend aus einem Aufnahmeglied (32, 132) und einem Einsteckglied (36, 136), geeignet zum gegenseitigen Zusammenstecken und Sichern der strukturellen Verbindung der Baublöcke (12, 12a, 12b, 12c; 112, 112a, 112b), wobei das Einsteckglied (36, 136) durch eine Glasfaserstange (38, 138) umgeformt ist, die teilweise im unbewehrten Beton (BCF) eingelassen ist, wobei die Glasfaserstange einen obersten Teil (38ext, 138ext) umfasst, der sich außerhalb der Aussparungen (34c,134b) zur Anbringung von Hebemitteln erstreckt.

2. Bauwerk nach Anspruch 1, wobei die Glasfaserstange (38, 138) mindestens teilweise in den beiden Baublöcken (12, 12a, 12b, 12c; 112, 112a, 112b) zur Sicherung einer mechanischen Verbindung der genannten Baublöcke (12, 12a, 12b,12c; 112, 112a, 112b) mit der genannten Glasfaserstange (38, 138) eingelassen ist zur Haftung des zuletzt genannten mit dem unbewehrten Beton (BCF) und/oder mit einem Dichtstoff (40, 140).

3. Bauwerk nach Anspruch 2, wobei das Aufnahmeglied (32, 132) der gegenseitigen, festen Verbindungsmittel (30, 130) eine Aussparung (34a, 34b, 34c; 134a) enthält, die in einem der Baublöcke (12, 12a, 12b, 12c; 112, 112a, 112b), geformt ist und auf der Innenseite derselben die Glasfaserstange (38, 138) und der Dichtstoff (40, 140) angeordnet sind.

4. Bauwerk nach Anspruch 3, wobei die Glasfaserstange (138) im Übrigen im unbewehrten Beton (BCF) zur Bildung der anderen Baublöcke (112a) versenkt ist.

5. Bauwerk nach Anspruch 2, wobei das Aufnahmeglied (32, 132) der gegenseitigen, festen Verbindungsmittel koaxiale Aussparungen (34a, 34b, 34c) umfasst, die in jedem der Baublöcke (12, 12a, 12b, 12c) geformt sind und in deren Innerem die Glasfaserstange (38) und der Dichtstoff (40) angeordnet sind.

6. Bauwerk nach einem der Ansprüche 1 bis 5 umfasst Abstandhalter (18, 118) zum Halten eines bestimmten Abstands zwischen den beiden Baublöcken (12, 12a, 12b, 12c; 112, 112a, 112b).

7. Bauwerk nach Anspruch 6, wobei die Glasfaserstange (38, 138) teilweise in den Abstandhaltern (18, 118) gesteckt ist zur Sicherung einer mechanischen Verbindung der genannten Abstandshalter (18, 118) mit der genannten Glasfaserstange (38, 138) durch Haftung des zuletzt genannten mit dem unbewehrten Beton und/oder mit einem Dichtstoff (40, 140).

8. Bauwerk nach Anspruch 7, wobei die Glasfaserstange (138) im Abstandhalter (118) zur Gewährleistung einer mechanischen Verbindung des genannten Abstandshalters (118) mit der genannten Glasfaserstange (138) versenkt ist durch Haftung der zuletzt genannten mit dem unbewehrten Beton (BCF).

9. Bauwerk nach Anspruch 7, wobei der Abstandhalter (18) eine koaxiale Aussparung (34a, 34b, 34c) an den (an dem) Baublöcke(n) (Baublock) (12, 12a, 12b, 12c), aufweist, wobei die Glasfaserstange (38) in dieser Aussparung (34a, 34b, 34c) versenkt ist und durch den Dichtstoff (40) versiegelt ist zur Sicherung einer mechanischen Verbindung des genannten Abstandhalters (18) mit der Glasfaserstange (38) durch Haftung mit dem Dichtstoff (40).

10. Bauwerk nach einem der Ansprüche 7 bis 9, wobei die Abstandhalter aus dem unbewehrten Beton (BCF) ausgebildet sind und aus einer oder mehreren Erweiterungen eines Baublocks bestehen.

11. Bauwerk nach einem der Ansprüche 7 bis 9, wobei die mit Abstandhalter strukturell verschieden von den Baublöcken sind und aus einem anderen Material als unbewehrtem Beton (BCF) geformt sind.

12. Bauwerk nach einem der Ansprüche 1 bis 11, wobei das Ökogranulat aus gleichermaßen unterschiedlichem Sekundärmuschelsand besteht, wobei der Muschelsand 15% bis 50% des Gesamtgewichts des Muschelsands und Sekundärsands darstellt.

13. Bauwerk nach einem der Ansprüche 1 bis 12, wobei das Ökogranulat gleichermaßen aus Zusatzgranulaten aus ganzen Muschelabfällen besteht und/oder bzw. Teile der Größen über 4 mm entsprechen.

14. Bauwerk nach einem der Ansprüche 1 bis 13, wobei die Verstärkungsfasern aus Naturfasern und/oder Polypropylenfasern sind.

15. Bauwerk nach einem der Ansprüche 1 bis 14, wobei die Verstärkungsfasern einer Länge von 1 Zentimeter bis 10 Zentimeter entsprechen.

16. Bauwerk nach einem der Ansprüche 1 bis 15, wobei die Verstärkungsfasern einer Masse von weniger als 5% des Gesamtgewichts des Ökogranulats, insbesondere von 0,2% bis 1% des Gesamtgewichts vom Ökogranulat entsprechen.

17. Bauwerk nach einem der Ansprüche 1 bis 16, wobei in einem und/oder in einem anderen zwei Baublöcke aus zumindest ein voll abgedeckter Körper durch eine Oberflächenbeschichtung, die auf dem unbewehrten Beton (BCF) ausgebildet ist, besteht.

18. Bauwerk nach einem der Ansprüche 1 bis 16, wobei in einem und/oder in einem anderen der zumindest beiden Baublöcke (12, 12a, 12b, 12c; 112, 12a, 12b) einen vollen Körper aus unbewehrtem Beton (BCF) aufweist.

19. Herstellungsverfahren eines Bauwerks (10, 110), welches zur Nutzung im Unterwasserbereich nach einem der Ansprüche von 1 bis 18 mit mehreren Schritten bestimmt ist, bestehend aus:
- Zerkleinern von Muschelprodukten bis zum Erhalt von Muschelsand, welcher Aggregate der Größe von 160 Mikrometer bis 4 Millimeter umfassen, Zugabe vom Muschelsand, Kies und Verstärkungsfasern zur Bildung eines Ökogranulats und Agglomeration des Ökogranulats durch ein Bindemittel zur Bildung eines unbewehrten Betons (BCF);
- Realisieren eines unbewehrten Betons (BCF), eines ersten Baublocks (12, 12a; 112, 112a), das gegenseitige, feste Verbindungsmittel (30, 130) umfasst, welche durch eine Glasfaserstange (38; 138) geformt sind, wobei die Glasfaserstange einen obersten Teil (38ext; 138ext) umfasst, das außerhalb der Aussparungen (34c; 134b) heraussteht, was die Fixierung von Siegelmitteln erlaubt,
- Realisierung eines unbewehrten Betons (BCF), eines zweiten Baublocks (12, 12b; 112, 112b), das gegenseitige, feste Verbindungsmitteln (30; 130) umfasst, welche durch eine Aussparung (34b; 134b) geformt ist, die im zweiten Baublock (12, 12b; 112, 112b) angeordnet ist und die Innenseite derselben zumindest teilweise in der Glasfaserstange (38 ; 138) gesenkt ist;
- Zusammenbau des ersten und des zweiten Baublocks (12, 12a, 12b; 112, 112a, 112b) durch Versiegelung der Glasfaserstange (38; 138) der gegenseitigen, festen Verbindungsmittel (30; 130) des ersten Baublocks (12, 12b; 112, 112b) in der Aussparung (34b; 134b) der gegenseitigen, festen Verbindungsmittel (30; 130) des zweiten Baublocks (12, 12b; 112, 112b) zur Sicherung der strukturellen Verbindung des genannten ersten und des zweiten Baublocks (12, 12a, 12b; 112, 112a, 112b).

20. Herstellungsverfahren nach Anspruch 19, wobei die Realisierung des ersten Baublocks (112, 112a) mehrere Schritte umfasst, an erster Stelle das Fließen des unbewehrten Betons (BCF) zur Bildung des ersten Baublocks (112, 112a) und an zweiter Stelle das Eintauchen der Glasfaserstange (138) in diesen ersten Baublock (112, 112a), bevor der unbewehrte Beton (BCF) aushärtet, so dass die Glasfaserstange (138) nach Einlassung im besagten ersten Baublock (112, 112a) versenkt ist, wobei die Realisierung des zweiten Baublocks (112, 112b) folgendes umfasst, ein Schritt zum Fließen des unbewehrten Betons (B, C, F), um einen zweiten Baublock auszuformen, in dem eine Aussparung (134b) an der Innenseite derselben zumindest teilweise ausgebildet ist und in der Glasfaserstange (138) gesteckt ist, wobei die strukturelle Verbindung des ersten und des zweiten Baublocks (112, 112a, 112b) anschließend mehrere Schritte umfasst, an erster Stelle die Eingabe des Bindemittels (140) in die Aussparung (134b) des zweiten Baublocks (112, 112b), dann an zweiter Stelle das Überlagern des zweiten Baublocks (112, 112b) auf den ersten Baublock (112, 112a) durch Einführung der Glasfaserstange (138) an der Innenseite der Aussparung (134b), welche am zweiten Baublock (112, 112b) ausgeformt ist, um die genannte Glasfaserstange (138) im zweiten Baublock (112, 112b) zu versiegeln.

21. Herstellungsverfahren nach Anspruch 19, wobei zur Realisierung des ersten Baublocks (12, 12a) mehrere Schritte umfasst, an erster Stelle das Fließen des unbewehrten Betons (BCF) zur Bildung des ersten Baublocks (12, 12a), indem eine Aussparung (34a) an der Innenseite derselben ausgebildet ist und zumindest teilweise in der Glasfaserstange (38) gesteckt ist, wobei die Realisierung des zweiten Baublocks (12, 12b) folgende Schritte umfasst, das Fließen des unbewehrten Betons (BCF) zur Bildung des zweiten Baublocks (12, 12b), indem eine Ausparung (34b) an der Innenseite derselben ausgebildet ist und zumindest teilweise in die Glasfaserstange (38) gesteckt ist, wobei die strukturelle Verbindung des ersten und des zweiten Baublocks (12, 12a, 12b) folgende Schritte umfasst, an erster Stelle die Einfüllung des Bindemittels (40) gleichzeitig in den Aussparungen (34a, 34b) des ersten und zweiten Baublocks (12, 12a, 12b) und an dritter Stelle die Einfüllung der genannten Glasfaserstange (38) gleichzeitig in den Aussparungen (34a, 34b) des ersten und des zweiten Baublocks (12, 12a, 12b), um die Glasfaserstange (38) in den besagten ersten und zweitem Baublöcken (12, 12a, 12b) zu versiegeln.

22. Herstellungsverfahren nach einem der Ansprüche 19 bis 21, bestehend aus mehreren Schritten, an erster Stelle die Einbringung der Abstandhalter (18, 118) für einen bestimmten Abstand zwischen dem ersten und dem zweiten Baublock (12, 12a, 12b; 112, 112a, 112b) und an zweiter Stelle die Einführung der Glasfaserstange (38, 138) in diesen Abstandhaltern (18, 118) zur Sicherung einer mechanischen Verbindung der genannten Abstandhalter (18, 118) mit der genannten Glasfaserstange (38, 138) durch Haftung der zuletzt genannten mit dem unbewehrten Beton (BCF) und/oder mit dem Versiegelungsmittel (40, 140).

23. Herstellungsverfahren nach einem der Ansprüche 19 bis 22, bestehend aus einem Zusatzschritt vor dem Schritt der Agglomeration erfolgt der Zusatz von unterschiedlichem Sekundärsand vom Muschelsand in das Ökogranulat, wobei 15 % bis 50 % des Gesamtgewichts Muschelsand und Sekundärsand darstellen.

24. Herstellungsverfahren nach einem der Ansprüche 19 bis 23, bestehend aus einem Zusatzschritt vor dem Schritt der Agglomeration erfolgt die Verringerung des organischen Inhalts im Muschelsand um 5% des Gesamtgewichts des Muschelsands.

25. Herstellungsverfahren nach Anspruch 24, wobei der Schritt zur Einschränkung des organischen Anteils im Muschelsand um 5% des Gesamtgewichts des Muschelsands durch aeroben Abbau mineralischer und organischer Bestandteile, die in den ursprünglichen Muschelprodukten enthalten sind, realisiert wird.

26. Herstellungsverfahren nach einem der Ansprüche 19 bis 25, bestehend aus einem Zusatzschritt vor dem Schritt zur Verbindung von Muschelsand mit den Verstärkungsfasern zur nahezu vollständigen Entfernung von sonstigen Fasern aus dem Muschelsand.

27. Herstellungsverfahren nach einem der Ansprüche 19 bis 26, bestehend aus einem Zusatzschritt, vor dem Schritt der Agglomeration erfolgt der Zusatz von Zusatzgranulaten in das Ökogranulat von Muscheln als ganze und/oder Teile in der Größe über 4 mm.

## Claims

1. A structure (10, 110) especially designed for use in an underwater environment, comprising at least two construction blocks (12, 12a, 12b, 12c; 112, 112a, 112b) formed from a non-reinforced concrete (NRC) comprising a binder and an eco-aggregate agglomerated by the binder;
wherein the eco-aggregate, which is free of metallic elements, comprises gravel, reinforcing fibers, and shell sand composed of aggregates formed from shells of shellfish waste and having dimensions ranging from 160 micrometers to 4 millimeters;
**characterized in that** the two construction blocks (12, 12a, 12b, 12c; 112, 112a, 112b) comprise rigid mutual connection means (30, 130) having a female member (32; 132) and a male member (36, 136) that are adapted to engage with each other to ensure the structural association of the construction blocks (12, 12a, 12b, 12c; 112, 112a, 112b), the male member (36, 136) being formed by a fiberglass rod (38; 138) partially embedded in the non-reinforced concrete (NRC),
the fiberglass rod comprising an upper end portion (38ext; 138ext) spreading beyond pockets (34c; 134b), which allows the attachment of lifting means.

2. Structure according to claim 1, wherein the fiberglass rod (38; 138) is at least partially housed in the two construction blocks (12, 12a, 12b, 12c; 112, 112a, 112b) so as to ensure a mechanical connection of said construction blocks (12, 12a, 12b, 12c; 112, 112a, 112b) with said fiberglass rod (38; 138), by adhesion of the latter with the non-reinforced concrete (NRC) and/or with a sealant (40; 140).

3. Structure according to claim 2, wherein the female member (32; 132) of the rigid mutual connection means (30, 130) comprises a pocket (34a, 34b, 34c; 134a) formed in one of the construction blocks (12, 12a, 12b, 12c; 112, 112b) and inside of which are arranged the fiberglass rod (38; 138) and the sealant (40; 140).

4. Structure according to claim 3, wherein the fiberglass rod (138) is also embedded in the non-reinforced concrete (NRC) forming the other of the construction blocks (112a).

5. Structure according to claim 2, wherein the female member of the rigid mutual connection means comprises coaxial pockets (34a, 34b, 34c) formed in each of the construction blocks (12, 12a, 12b, 12c) and inside of which the fiberglass rod (38) and the sealant (40) are arranged.

6. Structure according to any one of claims 1 to 5, comprising spacer means (18; 118) suitable for maintaining a predetermined spacing between the two construction blocks (12, 12a, 12b, 12c; 112, 112a, 12b).

7. Structure according to claim 6, wherein the fiberglass rod (38, 138) is partially housed in the spacer means (18, 118) so as to ensure a mechanical connection of said spacer means (18, 118) with said fiberglass rod (38, 138), by adhesion of the latter with the non-reinforced concrete (NRC) and/or with a sealant (40, 140).

8. Structure according to claim 7, wherein the fiberglass rod (138) is embedded in the spacer means (118) so as to ensure a mechanical connection of said spacer means (118) with said fiberglass rod (138), by adhesion of the latter with the non-reinforced concrete (NRC).

9. Structure according to claim 7, wherein the spacer means (18) have a pocket (34a, 34b, 34c) coaxial to that (or those) of the construction block(s) (12, 12a, 12b, 12c), the fiberglass rod (38) being housed in this pocket (34a, 34b, 34c) and fixed by the sealant (40) so as to ensure a mechanical connection of said spacer means (18) with said fiberglass rod (38), by adhesion of the latter with the sealant (40).

10. Structure according to any one of claims 7 to 9, wherein the spacer means are formed from non-reinforced concrete (NRC) and constitute one or more extensions of one of the construction blocks.

11. Structure according to any one of claims 7 to 9, wherein the spacer means are structurally distinct from the construction blocks and are formed from a different material than non-reinforced concrete (NRC).

12. Structure according to one of claims 1 to 11, wherein the eco-aggregate also comprises secondary sand(s) that is (or are) different from shell sand, the shell sand representing 15% to 50% of the total weight of the shell and secondary sands.

13. Structure according to any one of claims 1 to 12, wherein the eco-aggregate also comprises additional aggregates formed from shells of shellfish waste that are whole and/or in pieces and have dimensions greater than 4 mm.

14. Structure according to any one of claims 1 to 13, wherein the reinforcing fibers are natural fibers and/or polypropylene fibers.

15. Structure according to any one of claims 1 to 14, wherein the reinforcing fibers have a length ranging from 1 centimeter to 10 centimeters.

16. Structure according to any one of claims 1 to 15, wherein the reinforcing fibers are less than 5% of the total weight of the eco-aggregate, in particular from 0.2% to 1% of the total weight of the eco-aggregate.

17. Structure according to any one of claims 1 to 16, wherein one and/or the other of the at least two construction blocks has (or have) a solid body coated with a surface coating formed from non-reinforced concrete (NRC).

18. Structure according to any one of claims 1 to 16, wherein one and/or the other of the at least two construction blocks (12, 12a, 12b, 12c; 112, 12a, 12b) has (or have) a solid body formed from non-reinforced concrete (NRC).

19. A method for manufacturing a structure (10; 110) intended for use in an underwater environment according to any of claims 1 to 18, comprising a plurality of steps consisting of:
crushing shellfish products until a shell sand is obtained comprising aggregates with dimensions ranging from 160 micrometers to 4 millimeters, associating the shell sand, gravel, and reinforcing fibers to form an eco-aggregate and agglomerating the eco-aggregate by means of a binder so as to constitute a non-reinforced concrete (NRC);
creating, from the non-reinforced concrete (NRC), a first construction block (12, 12a, 112, 112a) comprising rigid mutual connection means (30; 130) formed by a fiberglass rod (38; 138); the fiberglass rod comprising an upper end portion (38ext; 138ext) spreading beyond pockets (34c; 134b), which allows the attachment of lifting means,
creating, from said reinforced concrete (NRC), a second construction block (12, 12b, 112, 112b) comprising rigid mutual connection means (30; 130) formed by a pocket (34b; 134b) arranged in the second construction block (12, 12b; 112, 112b) and inside of which the fiberglass rod (38; 138) can be at least partially housed;
assembling the first and second construction blocks (12, 12a, 12b; 112, 112a, 112b) by embedding the fiberglass rod (38; 138) of the rigid mutual connection means (30; 130) of the first construction block (12, 12b; 112, 112b) in the pocket (34b; 134b) of the rigid mutual connection means (30; 130) of the second construction block (12, 12b; 112, 112b) so as to ensure the structural association of said first and second construction blocks (12, 12a, 12b; 112, 112a, 112b).

20. Manufacturing method according to claim 19, wherein the creation of the first construction block (112, 112a) comprises a plurality of steps consisting of, firstly, casting the non-reinforced concrete (NRC) to form the first construction block (112, 112a), and secondly, inserting the fiberglass rod (138) into the first construction block (112, 112a) before the non-reinforced concrete (NRC) hardens so that the fiberglass rod (138) is held embedded in said first construction block (112, 112a),
wherein the creation of the second construction block (112, 112b) next comprises a step of casting the non-reinforced concrete (NRC) to form the second construction block (112, 112b) while providing a pocket (134b) within which the fiberglass rod (138) can be at least partially housed,
wherein the structural association of the first and second construction blocks (112, 112a, 112b) next comprises several steps consisting of, firstly, introducing the sealant (140) into the pocket (134b) of the second construction block (112, 112b), and secondly, superposing the second construction block (112, 112b) on the first construction block (112, 112a) while lodging the fiberglass rod (138) within the pocket (134b) formed in the second construction block (112, 112b) so as to embed said fiberglass rod (138) in the second construction block (112, 112b).

21. Manufacturing method according to claim 19, wherein the creation of the first construction block (12, 12a) comprises a plurality of steps consisting of, firstly, casting the non-reinforced concrete (NRC) to form the first construction block (12, 12a) while providing a pocket (34a) within which the fiberglass rod (38) can be at least partially housed, then,
wherein the creation of the second construction block (12, 12b) next comprises a step consisting of casting the non-reinforced concrete (NRC) to form the second construction block (12, 12b) while providing a pocket (34b) within which the fiberglass rod (38) can be at least partially housed,
wherein the structural association of the first and second construction blocks (12, 12a, 12b) next comprises several steps consisting of, firstly, introducing the sealant (40) simultaneously into the pockets (34a, 34b) of the first and second construction blocks (12, 12a, 12b), and thirdly, introducing said fiberglass rod (38) simultaneously into the pockets (34a, 34b) of the first and second construction blocks (12, 12a, 12b) so as to embed said fiberglass rod (38) in said first and second construction blocks (12, 12a, 12b).

22. Manufacturing method according to any one of claims 19 to 21, comprising a plurality of steps consisting of, firstly, providing spacer means (18, 118) so as to maintain a predetermined spacing between the first and second construction blocks (12, 12a, 12b; 112, 112a, 112b), and secondly, lodging the fiberglass rod (38; 138) in these spacer means (18; 118) so as to ensure a mechanical connection of said spacer means (18; 118) with said fiberglass rod (38; 138), by adhesion of the latter with the non-reinforced concrete (NRC) and/or the sealant (40, 140).

23. Manufacturing method according to any one of claims 19 to 22, comprising an additional step, prior to the agglomeration step, consisting of adding secondary sands that are not shell sand to the eco-aggregate, these sands representing 15% to 50% of the total weight of the secondary and shell sands.

24. Manufacturing method according to any one of claims 19 to 23, comprising an additional step, prior to the agglomeration step, consisting of limiting the percentage of organic matter in the shell sand to 5% of the shell sand by weight.

25. Manufacturing method according to claim 24, wherein the step of limiting the percentage of organic matter in the shell sand to 5% of the shell sand by weight is achieved by aerobic degradation of the mineral and organic compounds initially present in the shellfish products.

26. Manufacturing method according to any one of claims 19 to 25, comprising an additional step, before the step of associating shell sand with reinforcing fibers, consisting of eliminating almost all fibrous elements in the shell sand.

27. Manufacturing method according to one of claims 19 to 26, comprising an additional step, before the agglomeration step, consisting of adding to the eco-aggregate some additional aggregates formed from shells of shellfish waste that are whole and/or in pieces and have dimensions greater than 4 mm.
